# EUROPEAN PATENT APPLICATION

(11) **EP 4 600 918 A1**
(43) Date of publication of application: **13.08.2025**
(21) Application number: 25156400.1
(22) Date of filing: 06.02.2025
(51) Int. Cl.: G06V 20/40, G06V 20/52

(54) **METHOD OF VIDEO SURVEILLANCE, COMPUTER PROGRAM, STORAGE MEDIUM AND VIDEO SURVEILLANCE SYSTEM**

(30) Priority: 06.02.2024 GB 202401572
(71) Applicant: Milestone Systems A/S, 2605 Brøndby (DK)
(72) Inventor: NASROLLAHI, Kamal, 2605 Brøndby (DK); LI, Zenjie, 2605 Brøndby (DK); NORTON, Barry, 2605 Brøndby (DK)
(74) Representative: Canon Europe Limited

(57) **Abstract**

The disclosure provides a method of video surveillance comprising capturing video data from a plurality of video surveillance cameras identified by unique identifiers; acquiring metadata generated by performing captioning of the video data, wherein the metadata comprises semantic data to represent content in the video data in combination with the unique identifiers; and identifying user-relevant content using either one of a user-defined semantic query and a user-selected Video Anomaly Detection - VAD - model, in combination with either one of a unique identifier and a subset of the unique identifiers.

## Description

### Technical field of the Disclosure

The present disclosure relates to a computer-implemented method of video surveillance, a computer program and a storage medium comprising such a program, and a video surveillance system. The present disclosure more particularly relates to Video Anomaly Detection (VAD).

### Background of the Disclosure

Surveillance systems are typically arranged to monitor surveillance data received from a plurality of data capture devices. A viewer may be overwhelmed by large quantities of video data captured by a plurality of cameras. If the viewer is presented with video data from all of the video cameras, then the viewer will not know which of the video cameras requires the most attention. Conversely, if the viewer is presented with video data from only one of the video cameras, then the viewer may miss an event that is observed by another camera.

An assessment needs to be made of how to allocate resources so that the most important surveillance data is viewed and/or recorded. For video data that is presented live, presenting the most important information assists the viewer in deciding actions that need to be taken, at the most appropriate time. For video data that is recorded, storing and retrieving the most important information assists the viewer in understanding events that have previously occurred. Providing an alert or generate a so-called rules-based 'event' (i.e. an action triggered by an actual event of interest) to identify important information ensures that the viewer is provided with the appropriate context in order to assess whether captured surveillance data requires further attention.

The identification of whether information is important is typically made by the viewer, although the viewer can be assisted by the alert and/or event identifying that the information could be important. Typically, the viewer is interested to view video data that depicts the motion of objects that are of particular interest, such as people or vehicles.

VAD, in the field of computer vision (CV), also referred to as abnormal event detection, abnormality detection or outlier detection is the identification of rare events in data. When applied to computer vision this concerns the detection of abnormal behaviour in amongst other things people, crowds and traffic. With the ability to automatically determine if footage is relevant or irrelevant through anomaly detection, this amount of footage could be greatly reduced and could potentially allow for live investigation of the surveillance. This could result in emergency personal receiving notice of a traffic accident before it is called in by bystanders, care takers to know if an elderly has fallen down or police to be aware of an escalating situation requiring their intercession.

For safety and security reasons, automated VAD systems are of particular interest in video surveillance setups. Whilst mostly targeted by means of innovative Deep Learning (DL) based solution proposals, their accuracies, however, are yet far from those achieved on other prevalent image processing tasks such as image classification, for example, which holds in particular with respect to the high performance variance observed across different available VAD datasets.

Furthermore, existing VAD systems and pipelines are often complex in nature, opaque in the way they reach conclusions. They further require a lot of training data and may be difficult to retrain as a consequence.

However, a typical VAD pipeline generally exhibits the following problems:
- close-set object detection models used with that pipeline can only identify predefined classes (e.g. buses, cars) and typically output results such as 'there is a 20% chance that the object is a bench'. That is to say, a classifier is usually trained to assign a class it has been previously trained on to a detected object. This carries a significant risk of error (e.g. a classifier assigns a class 'zebra' to an 'elephant' as it has not been trained to identify elephants);
- to detect a newly-defined class, a new model is thus required;
- object-level analysis is performed independently for each object on each frame, lacking inter-class relationships (e.g. relationships between humans and cars such as 'a human is driving a car' or 'a human is cleaning a car');
- this pipeline does not consider context even though VAD typically depends on context (e.g. 'a human is running in front of a hospital emergency department' may be considered normal whereas 'a human is running in a library' is generally considered abnormal, necessitating separate training for different monitoring scenarios). In other words, the existing pipeline lacks flexibility to handle different environments and contexts.

There have been attempts to apply Large Vision Language Models (LVLMs) to detect previously unknown objects in some simple cases e.g. for component defect detection (https://arxiv.org/abs/2308.15366). During model fine-tuning of such a LVLM, one needs to let the model understand what is normal, such as 'this is a photo of leather, which should be brown and without any damage, flaw, defect, scratch, hole or broken part.' During the inference stage (when the end user uses the model), the model will determine if there are defects on an image. Such solutions are potentially applicable in industrial and medical contexts (e.g. to detect manufacturing incidents, cancer tissues etc.), though not commercialised, but they are not easily translatable to surveillance or security contexts.

The present disclosure aims to address at least some of the above-mentioned problems, and/or to provide alternative VAD solutions more generally.

### Summary of the Disclosure

The present disclosure addresses at least some of the above-mentioned issues.

The present disclosure provides a method of video surveillance comprising:
- capturing video data from a plurality of video surveillance cameras identified by unique identifiers;
- acquiring metadata generated by performing captioning of the video data, wherein the metadata comprises semantic data to represent content in the video data in combination with the unique identifiers; and
- identifying user-relevant content using either one of a user-defined semantic query and a user-selected Video Anomaly Detection - VAD - model, in combination with either one of a unique identifier and a subset of the unique identifiers.

Optionally, in the method according to the present disclosure, the semantic data uses subject-predicate-object triples to represent content in the video data.

Optionally, in the method according to the present disclosure, performing captioning of the video data uses at least one machine learning model, MLM.

Optionally, in the method according to the present disclosure, the said MLM performs Open-Set Recognition, OSR, to recognise classes of subjects, predicates and/or objects which have not been predefined.

Optionally, in the method according to the present disclosure, the said MLM comprises a Large Language Model, LLM, as a first LLM, the first LLM being configured to perform captioning of the video data.

Optionally, in the method according to the present disclosure, the first LLM is configured to generate the subject-predicate-object triples from the said captioning.

Optionally, in the method according to the present disclosure, the said MLM uses a transformer encoder architecture, a transformer decoder architecture, or a transformer encoder-decoder architecture to convert captions generated by the first LLM into the subject-predicate-object triples which represent content in the video frames.

Optionally, in the method according to the present disclosure, the said MLM comprises another LLM, as a second LLM configured to convert captions generated by the first LLM into the subject-predicate-object triples which represent content in the video frames.

Optionally, in the method according to the present disclosure, the said MLM comprises another LLM, as a second LLM configured to perform a fine-tuning or embedding training process of the first LLM to make the captions generated by the first LLM conform to a subject-predicate-object format.

Optionally, in the method according to the present disclosure, capturing the video data, acquiring the metadata, and identifying the said user-relevant content are performed in a live fashion, the method further comprising generating a message, instruction, event and/or additional metadata in a Video Management System, VMS, when the said user-defined semantic query or the said user-selected VAD model in combination with either one of the said unique identifier and the said subset of the unique identifiers match at least one corresponding subject-predicate-object and at least one corresponding unique identifier in the metadata.

Optionally, in the method according to the present disclosure, generating the message, instruction, event or additional metadata is triggered by a rules engine, as a first rules engine, based on the said user-defined semantic query.

Optionally, in the method according to the present disclosure, the instruction comprises an instruction to modify at least a part of the video data or a display thereof.

Optionally, in the method according to the present disclosure, the message comprises an alert to be displayed in the VMS to a user.

Optionally, in the method according to the present disclosure, capturing the video data and acquiring the metadata is performed in a live fashion, and identifying the said user-relevant content is performed in a delayed fashion upon receipt of the said user-defined semantic query in combination with either one of the said unique identifier and the said subset of the unique identifiers.

Optionally, the method according to the present disclosure further comprises generating a graph, named first graph, to represent the subject-predicate-object triples generated by performing captioning of the video data, wherein subjects and objects are represented as nodes and predicates as edges.

Optionally, the method according to the present disclosure further comprises fact-checking the subject-predicate-object triples of the first graph against at least one ontology-based knowledge graph representing possible subject-predicate-object triples.

Optionally, in the method according to the present disclosure, the ontology-based knowledge graph is created or selected amongst multiple graphs depending on contextual information representing attributes of the said video surveillance cameras and/or an environment in which the video data is captured.

Optionally, in the method according to the present disclosure, the said user-selected VAD model comprises at least one machine learning model, MLM, or a rules engine, configured to perform VAD, on the acquired video data corresponding to the said unique identifier or the said subset of the unique identifiers.

The present disclosure further provides a computer program comprising instructions which, when executed by a computer, cause the computer to carry out a method as specified in any one of the above paragraphs or combination thereof.

The present disclosure further provides a storage medium comprising a program as specified in the preceding paragraph.

The present disclosure further provides a video surveillance system comprising one or more processors configured to:
- cause capture of video data by a plurality of video surveillance cameras identified by unique identifiers;
- acquire metadata generated by performing captioning of the video data, wherein the metadata comprises semantic data to represent content in the video data in combination with the unique identifiers; and
- identify the said user-relevant content using either one of a user-defined semantic query and a user-selected Video Anomaly Detection - VAD - model, in combination with either one of a unique identifier and a subset of the unique identifiers.

Optionally, in the video surveillance system according to the disclosure, the semantic data uses subject-predicate-object triples to represent content in the video data.

Optionally, in the video surveillance system according to the disclosure, performing captioning of the video data uses at least one machine learning model, MLM.

Optionally, the video surveillance system according to the disclosure is configured to capture the video data, acquire the metadata, and identify the said user-relevant content in a live fashion, the video surveillance system being configured to generate a message, instruction, event and/or additional metadata in a Video Management System, VMS, of the video surveillance system, when the said user-defined semantic query or user-selected VAD model in combination with either one of the said unique identifier and the said subset of the unique identifiers match at least one corresponding subject-predicate-object and at least one corresponding unique identifier in the metadata.

Optionally, the video surveillance system according to the disclosure is configured to capture the video data and acquire the metadata in a live fashion, and identify the said user-relevant content in a delayed fashion upon receipt of the said user-defined semantic query in combination with either one of the said unique identifier and the said subset of the unique identifiers.

Optionally, in the video surveillance system according to the disclosure, the said user-selected VAD model comprises another MLM, as a second MLM, or a rules engine, configured to perform VAD, on the acquired video data corresponding to the said unique identifier or the said subset of the unique identifiers.

In particular, the disclosure allows to create a more efficient VAD pipeline that is less resource-intensive to set up compared to existing VAD pipelines which require multiple detection models (typically, one detection model per environment or context).

### Brief description of the drawings

Embodiments of the present disclosure will now be described, by way of example only, with reference to the accompanying drawings in which:
Figure 1 shows an example of a video surveillance system in which the present disclosure can be implemented;
Figure 2A is a flowchart illustrating a pipeline for VAD according to the prior art.
Figure 2B is a flowchart illustrating an example of a pipeline for VAD using the disclosure.
Figure 3 is a flowchart illustrating an example of the method of video surveillance according to the disclosure.
Figure 4 illustrates an example of a Video Management Software window, wherein a left part displays a video stream of a patient lying in a bed of a first hospital room, and a right part displays a video stream of a patient lying beside a bed in a second hospital room.
Figure 5 illustrates an example of a Video Management Software window, wherein a left part shows a stream of a person walking with a bike in a train station, and a right part shows a video stream of a person riding a bike in the train station.

Additional features of the present disclosure will become apparent from the following description of embodiments with reference to the attached drawings.

### Detailed Description of the Disclosure

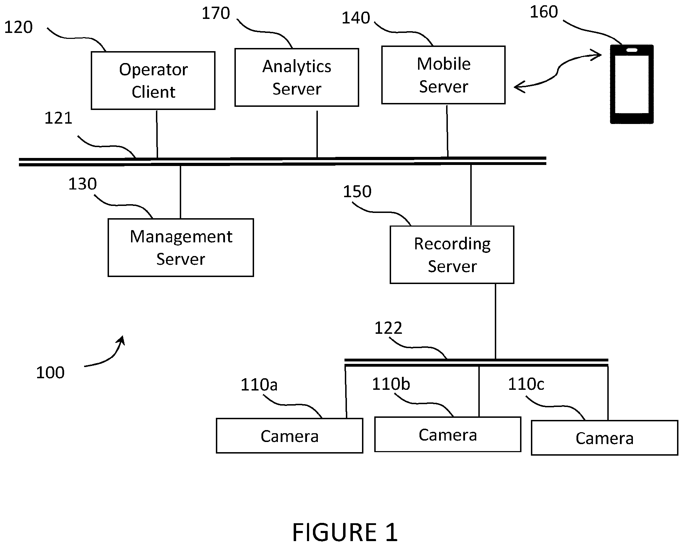

Figure 1 shows an example of a video surveillance system 100 in which embodiments of the disclosure can be implemented. The system 100 comprises a management server 130, a recording server 150, an analytics server 170 and a mobile server 140, which collectively may be referred to as a video management system. Further servers may also be included in the video management system, such as further recording servers or archive servers. A plurality of video surveillance cameras 110a, 110b, 110c send video data to the recording server 150. An operator client 120 is a fixed terminal which provides an interface via which an operator can view video data live from the video cameras 110a, 110b, 110c, and/or recorded video data from the recording server 150.

The video cameras 110a, 110b, 110c capture image (video) data and send this to the recording server 150 as a plurality of video data streams.

The recording server 150 stores the video data streams captured by the video surveillance cameras 110a, 110b, 110c. Video data is streamed from the recording server 150 to the operator client 120 depending on which live streams or recorded streams are selected by an operator to be viewed.

The mobile server 140 communicates with a user device 160 which is a mobile device such as a smartphone or tablet which has a touch screen display. The user device 160 can access the system from a browser using a web client or a mobile client. Via the user device 160 and the mobile server 140, a user can view recorded video data stored on the recording server 150. The user can also view a live feed via the user device 160.

The analytics server 170 can run analytics software for image analysis, for example motion or object detection, facial recognition, event detection. The analytics server 170 may generate metadata which is added to the video data and which describes objects which are identified in the video data.

Other servers may also be present in the system 100. For example, an archiving server (not illustrated) may be provided for archiving older data stored in the recording server 150 which does not need to be immediately accessible from the recording server 150, but which it is not desired to be deleted permanently. A fail-over recording server (not illustrated) may be provided in case a main recording server fails.

The operator client 120, the analytics server 170 and the mobile server 140 are configured to communicate via a first network/bus 121 with the management server 130 and the recording server 150. The recording server 150 communicates with the video cameras 110a, 110b, 110c via a second network/bus 122.

The management server 130 includes Video Management Software (VMS) for managing information regarding the configuration of the surveillance/monitoring system 100 such as conditions for alarms, details of attached peripheral devices (hardware), which data streams are recorded in which recording server, etc.. For instance, the VMS may be the XProtect^{®} software program developed by Milestone Systems A/S. The management server 130 also manages user information such as operator permissions. When an operator client 120 is connected to the system, or a user logs in, the management server 130 determines if the user is authorised to view video data. The management server 130 also initiates an initialisation or set-up procedure during which the management server 130 sends configuration data to the operator client 120. The configuration data defines the video cameras in the system, and which recording server (if there are multiple recording servers) each video camera is connected to. The operator client 120 then stores the configuration data in a cache. The configuration data comprises the information necessary for the operator client 120 to identify cameras and obtain data from cameras and/or recording servers.

Object detection/recognition can be applied to the video data by object detection/recognition software running on the analytics server 170. The object detection/recognition software preferably generates metadata which is associated with the video stream and defines where in a frame an object has been detected. The metadata may also define what type of object has been detected e.g. person, car, dog, bicycle, and/or characteristics of the object (e.g. colour, speed of movement etc). Other types of video analytics software can also generate metadata, such as licence plate recognition, or facial recognition.

Object detection/recognition software, may be run on the analytics server 170, but some cameras can also carry out object detection/recognition and generate metadata, which is included in the stream of video data sent to the recording server 150. Therefore, metadata from video analytics can be generated in the video camera, in the analytics server 170 or both. It is not essential to the present disclosure where the metadata is generated. The metadata may be stored in the recording server 150 with the video data, and transferred to the operator client 120 with or without its associated video data.

The video surveillance system of Figure 1 is an example of a system in which the present disclosure can be implemented. However, other architectures are possible. For example, the system of Figure 1 is an "on premises" system, but the present disclosure can also be implemented in a cloud based system. In a cloud based system, the video cameras stream data to the cloud, and at least the recording server 150 is in the cloud. Video analytics may be carried out at the video camera, and/or in the cloud. The operator client 120 or mobile client 160 requests the video data to be viewed by the user from the cloud.

A search facility of the operator client 120 may allow a user to look for a specific object or combination of objects by searching metadata. Metadata generated by video analytics such as object detection/recognition discussed above can allow a user to search for specific objects or combinations of objects (e.g. white van or man wearing a red baseball cap, or a red car and a bus in the same frame, or a particular license plate or face). The operator client 120 or the mobile client 160 will receive user input of at least one search criterion, and generate a search query.

A search can then be carried out for metadata matching the search query. The search software then sends a request to extract image data from the recording server 150 corresponding to portions of the video data having metadata matching the search query, based on the timestamp of the video data. This extracted image data is then received by the operator client 120 or mobile client 160 and presented to the user at the operator client 120 or mobile client 160 as search results, typically in the form of a plurality of thumbnail images, wherein the user can click on each thumbnail image to view a video clip that includes the object or activity.

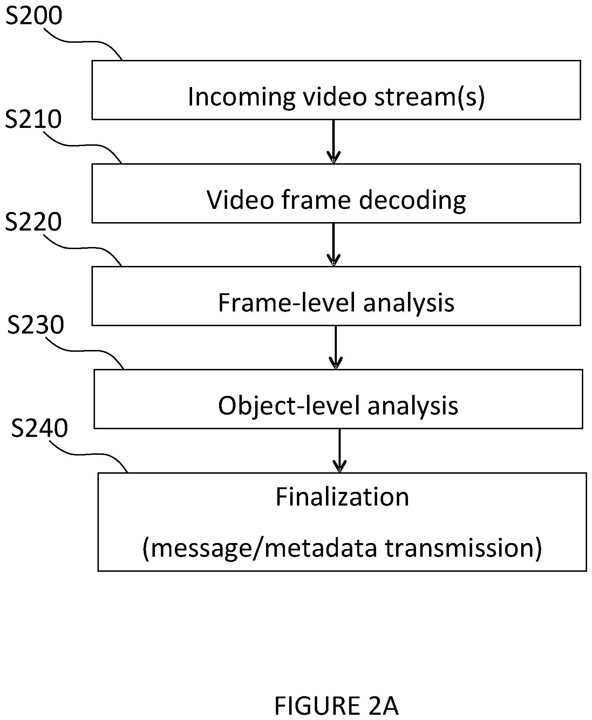

Figure 2A illustrates a prior art example of a typical VAD pipeline implemented in Video Management Software (VMS). Such a pipeline may be powered by any known tools such as the NVIDIA^{®} DeepStream SDK.

In step S200, one or more video streams are received in the VMS from respective video surveillance cameras monitoring a surveillance area. That is to say, video data is captured from a plurality of video surveillance cameras identified by unique identifiers (i.e. each video camera having a respective ID).

In step S210, the one or more video streams are decoded by the VMS using one or more video standards such as H.264, H.265, H.266, VP8, VP9 and AV1. Of course, the video streams may be provided to the VMS in uncompressed video formats such that the step S210 is not needed.

In step S220, corresponding to a frame-level analysis, a machine learning model is commonly used to identify predefined object classes, such as humans and cars. This step may also encompass more advanced analyses, such as anomaly detection.

In step S230, corresponding to an object-level analysis, the detected objects are further categorised, determining attributes such as a person's posture or a car's colour. That is, one or more attributes of each object is extracted and/or classified. The step S230 may output one or more bounding boxes encompassing one or more objects.

In step S240, corresponding to a finalization step, information from step S230 is used to generate events and/or messages (e.g. a person/car count, line crossing information, anomalous events), edited images (e.g. privacy masking), in the VMS, and relevant metadata for future use, in a conventional way. This step typically includes presenting the user or operator with relevant information, and/or generating metadata for future use (e.g. for statistical purposes such as for counting detected anomalies over time etc.). The metadata may be transmitted to remote devices, such as remote client devices, the analytics server etc.

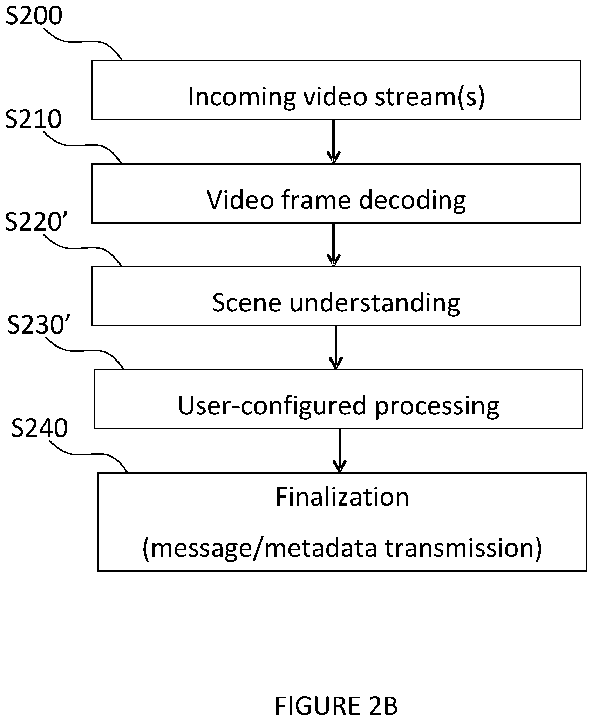

Figure 2B illustrates a VAD pipeline, according to the disclosure, implemented in VMS as described above.

Steps S200 and S210 are identical to those of Figure 2A, a new description thereof will therefore be omitted. Steps S220, S230 and S240 are replaced with steps S220', S230' and S240', respectively.

In step S220', (content) metadata is generated by performing captioning of the video data. The metadata comprises semantic data (according to a semantic data model, SDM) to represent content in the video data in combination with the unique identifiers (i.e. the respective IDs of the video surveillance cameras). The metadata may be generated in the analytics server 170, for example, in any other aforementioned server and/or operator client 120. The metadata is then acquired by the VMS, which runs in the management server 130 in the examples above.

The semantic data preferably uses (or preferably conforms) to subject-predicate-object triples (triples according to the known Resource Description Framework, RDF, data model, as defined in the relevant W3C^{®} recommendations available on https://www.w3.org) to represent content in the video data. In particular, individual frames of the video data are converted into text descriptions of scenes in a format such as (subject, prediction, object). The 'subject', 'predicate' and 'object' terms should be construed as having their ordinary meaning in the art, i.e. 'subject' means an entity described by a triple, 'predicate' means a binary relation between a subject and an object, such as a verb, preposition, conjunction, state of being etc., and 'object' means an entity related to a subject, such as a noun or nominal phrase.

The step S220' is preferably performed using at least one machine learning model, MLM.

The said MLM may be trained using unsupervised learning (i.e. using unlabelled data) or supervised learning (i.e. using labelled data), depending on the desired use case or which datasets are available and suitable.

The MLM is advantageously trained on a wide variety of scenes and contexts such that the step S220' becomes more scene-agnostic and less dependent on user configurations. As a result, the VMS may require only a single detection model for different scenes and video surveillance cameras.

The step S220' may convert video frames into text descriptions of scenes in the format of (subject, prediction, object), such as "subject_i1 / predicate1 / object_j1" and "subject_i2 / predicate2 / object_j2... ", where object_j1 and object_j2 may refer to the same object. Similarly, predicate1 and predicate2 may correspond to the same prediction, but each entity can only appear once as a subject node (i.e. subject_i1, subject_i2 etc.). However, a subject may be an object in another triple and vice versa.

The step S220' may be triggered only when a predefined threshold is met (e.g. a threshold for detecting motion or specific objects such as humans or vehicles), for computational efficiency.

Performing image captioning to convert images into text descriptions (semantic data) may be achieved by any known techniques, such as by using at least one MLM as mentioned above.

The MLM preferably performs Open-Set Recognition, OSR, to recognise classes of subjects, predicates and/or objects which have not been predefined. In other words, the MLM is advantageously configured to recognise classes of subjects, predicates and/or objects which have not been encountered during training, whilst also properly recognising classes of subjects, predicates and/or objects which have been encountered during training. That is to say, the MLM is preferably configured not to assume that any classes which are encountered post training belong to classes seen during training.

The said MLM preferably comprises a Large Language Model, LLM, as a first LLM, the first LLM being configured to perform captioning of the video data. As an example, the known BLIP-2 (https://arxiv.org/abs/2301.12597) may be used.

The text descriptions may be converted or transformed into subject-predicate-object triples using known techniques or another LLM, for example a second LLM such as Llama 2 (https://arxiv.org/abs/2307.09288), configured to perform a fine-tuning with a small dataset (dozens to a few hundred items of data) or embedding training process of the first LLM to make the captions generated by the first LLM conform to a subject-predicate-object format.

Alternatively, images may be converted into the said text descriptions using any one of a transformer encoder architecture, a transformer decoder architecture, or a transformer encoder-decoder architecture.

As another alternative, it is also possible to directly fine-tune an image captioning model to generate text descriptions into subject-predicate-object triples, for example by fine-tuning the known BLIP-2.

The next step S230' corresponds to a user-configured processing. In the context of the present disclosure, 'user' here means an end-user of the VMS such as a security operator or user of the VMS.

The step S230' requires associating a user-defined semantic query or a user-selected Video Anomaly Detection - VAD - model, with one or more video surveillance cameras. That is to say, associating an event to be detected with one or more cameras. The event to be detected may be input by the said user in the form of the said user-defined semantic query (e.g. 'detecting a person falling') or in the form of a selection by the user of a VAD model (e.g. selection of a model for detecting a patient falling from a bed in a hospital) amongst several detection models. The user may select the said VAD model in a list or otherwise, as presented to them in the VMS.

The VMS will use the association to identify user-relevant content, i.e. content in the video data corresponding to the said user-defined semantic query or content in the video data that can be identified using the selected VAD model.

The use of semantic data in the captioning of the video data, in combination with the said association of a user-defined semantic query or user-selected VAD model with one or more video surveillance cameras, using the said unique identifier(s), provides the technical effect of allowing identification of the said user-relevant content.

More particularly, the said use of semantic data, in combination with the said association, allows to identify user-relevant content more accurately as compared to existing VAD models. The disclosure further allows to distinguish between situations or events which would otherwise be considered the same with existing VAD models.

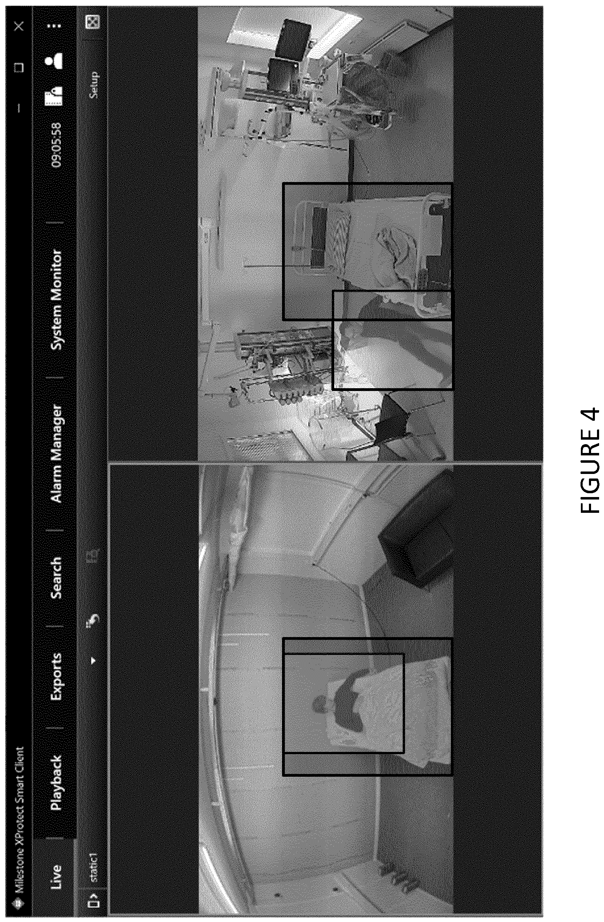

As an example, and as illustrated in Figure 4, the disclosure may allow to distinguish between a situation in a hospital where a patient lies down on a bed (left part of Figure 4) and a situation where a patient lies down on the floor beside a hospital bed (right part of Figure 4).

On the contrary, a typical VAD model would merely perform bounding boxes object detection and detect that a person lies down and that a bed exists within the same video frame(s), without determining whether the situation is problematic. Further analysis by a security operator or user of the VMS would be needed.

As another, similar example, a user of such a typical VAD model may be interested in detecting whether a bed-ridden person has left their hospital bed. In both situations of Figure 4, a typical VAD model and VMS may not generate any alerts or events, indicating to the user of the VMS that the patient has not left their bed, although this would only be true in the situation illustrated in the left part of Figure 4 (i.e. untrue in the situation illustrated in the right part of that same Figure).

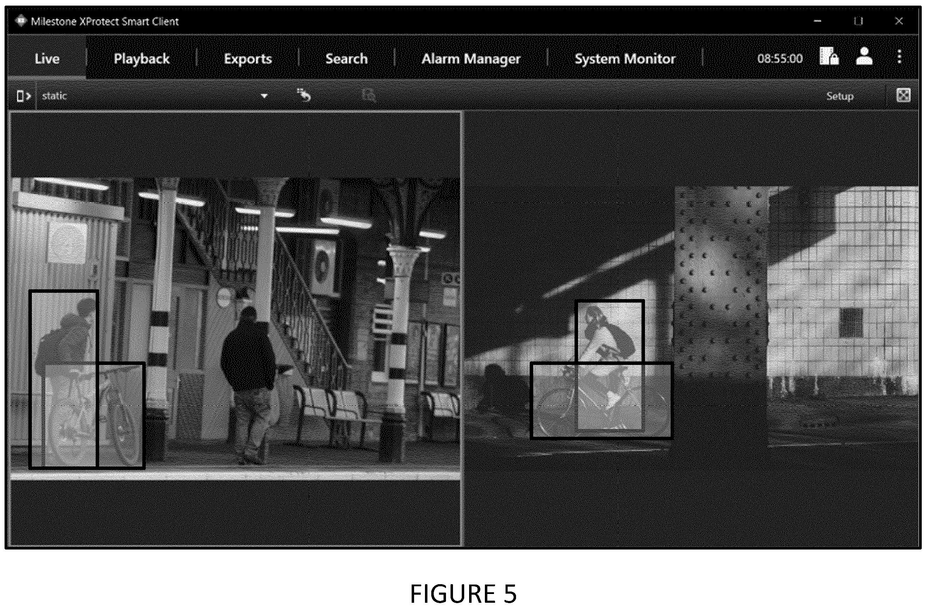

Figure 5 illustrates another example in which it is aimed to detect people riding bikes in a train station. Similarly to the example of Figure 4, a typical VAD model may not distinguish between a situation where a person walks next to a bike in the train station (left part of Figure 5) and a situation where a person actually rides a bike (right part of Figure 5). That is, a typical VAD model would perform bounding boxes object detection and detect that a detected person is moving near a detected bike within the same video frame(s).

According to the disclosure, by using semantic data in the captioning of the video data, in combination with the said association of a user-defined semantic query or user-selected VAD model with one or more video surveillance cameras, using the said unique identifier(s), a VMS is able to distinguish between the left and right situations of Figure 4. That is, the captioning according to the disclosure allows to define binary relations between entities (subjects) and objects, that can then be searched for by a user and/or automatically by a VAD model.

The left and right parts of Figures 4 and 5 illustrate examples which respectively differ from each other in the predicates that are used. That is to say, in the left and right parts of Figure 4 the subject (person) and the object (bed) are the same, but the relationship between them (predicate) is different. Similarly, in the left and right parts of Figure 5 the subject (person) and the object (bike) are also the same, but the relationship (predicate) is different. However, the skilled person understands that the disclosure is not limited to this and applies to situations wherein anomaly detection is performed based on any one of the subjects, predicates and/or objects, or combination thereof. For example, the same subject/predicate combination may be considered anomalous depending on which object is associated with it. Similarly, the same predicate/object combination may be considered anomalous depending on which subject is associated with it.

For instance, if the configuration includes 'detecting a person falling' in the video data from camera no. 1, a person lying in bed captured by the video camera no. 1 will not trigger a "fall" event (or alarm or alert) in the VMS, whereas a person lying on the floor captured by the video camera no. 1 will.

Obviously, the same user-defined semantic query or user-selected VAD model may be associated with more than one video surveillance camera, e.g. with a subset of the video surveillance cameras. However, the disclosure lies in the fact that the said user-defined semantic query or user-selected VAD model is not associated with all the video surveillance cameras (at the same time). This provides the technical effect of allowing to consider context in video anomaly detection, as in the above hospital emergency department/library example.

In step S230', the user may select a predefined VAD model for each unique identifier or each subset of the unique identifiers (hence for each video surveillance camera or a subset of the video surveillance cameras). The selection may be direct (e.g. selection of a VAD model to detect a person riding a bike) or indirect (e.g. selection of an environment or context such as 'school', 'hospital room', 'supermarket', 'train station', etc. that includes one or more relevant VAD model(s) such as the said VAD to detect a person riding a bike). The VMS may offer preset configurations for user convenience.

In contrast to the scene understanding step of S220', the implementation of user-configured processing of S230' depends on the specific application. However, applying appropriate algorithms for custom user configurations is much less resource-intensive than training new machine learning models. For instance, a basic rules engine is sufficient for VAD tasks like detecting cycling or detecting a person falling. Thus, the user-selected VAD model used by the user according to the disclosure may comprise a MLM or a rules engine configured to perform VAD on the acquired video data corresponding to the said unique identifier or the said subset of the unique identifiers, as need be for the use case.

For more general anomaly detection in the user-configured processing of S230', it is also possible to train a base anomaly detection model by fine-tuning a LLM like Llama 2. Subsequently, it is possible to further fine-tune the base model, or train embeddings for it, based on different predefined monitoring scenarios.

Relying on a LLM to directly detect anomalies from image descriptions as in the prior art is unpredictable. However, the present disclosure offers better control, and both model fine-tuning and embedding training have low computational requirements.

In step S240', events, alarms, alerts, messages and/or metadata etc. are generated based on the said user-defined semantic query or user-selected video VAD model, in combination with the said user-defined or user-selected camera settings of step S230' (if any).

Step S240' may rely on the known Grounding DINO technique (https://arxiv.org/abs/2303.05499) to locate and label in the video data the subjects and/or objects that correspond to the said user-defined semantic query or user-selected VAD model. Step S240' may reuse bounding boxes which have already been generated during the captioning, or create new ones as new be (e.g. if none were generated during the captioning, or if it is useful to combine some existing bounding boxes to highlight several entities within a single box). This facilitates identification, by the user, of relevant content within the video frames, for example, upon reviewing recorded video data.

Capturing video data will generally be performed in a live fashion, as usually required in a video surveillance context.

Acquiring the metadata generated by performing captioning of the video data is also preferably performed in a live fashion, to allow subsequent identification of user-relevant content in a prompt manner.

Identifying the said user-relevant content may be performed in a live or delayed fashion. Identifying the said user-relevant content in a live fashion may be performed when the said user-defined semantic query or user-selected VAD model are obtained prior to the occurrence of an event of interest for the user, i.e. beforehand. This will typically be the case when a user sets up the VMS to detect events of interest as they occur. The VMS will preferably generate a message, instruction, event and/or additional metadata, when the said user-defined semantic query or the said user-selected VAD model in combination with either one of the said unique identifier and the said subset of the unique identifiers match at least one corresponding subject-predicate-object and at least one corresponding unique identifier in the metadata.

For example, the VMS may generate a notification or trigger an alarm to warn the user that an event of interest has just occurred, generate an instruction to start an automation (e.g. to activate or deactivate access control in a surveillance area), and/or metadata such as an entry in a log of events or the like.

On the contrary, it may only be possible to identify the said user-relevant content after the occurrence of an event of interest for the user (i.e. in a delayed fashion), for instance, upon receipt of the said user-defined semantic query in combination with either one of the said unique identifier and the said subset of the unique identifiers. This will typically be the case when a user searches for events of interest in previous recordings of video data. In such cases, the VMS may also generate a message, instruction, event and/or additional metadata.

Generating the message, instruction, event or additional metadata may be triggered by a rules engine, as a first rules engine, based on the said user-defined semantic query. For instance, the rules engine may comprise a rule such as 'send a text to person X upon detection of a person falling by camera no. 1'.

The message mentioned in the examples above may be a visual alert e.g. a popup notification reading 'person falling detected by camera no. 1' or any other kind of alert.

The instruction mentioned in the examples above may be an instruction to modify at least a part of the video data or a display thereof, for example an instruction to overlay video data displayed in the VMS with a privacy mask, or alternatively, overlay the video data with identification data (e.g. one or more labels indicating to which class(es) detected object(s) belong) and/or historical data (e.g. one or more lists of times at which the object(s) have been detected).

The VAD pipeline of Figure 2B allows, for example, a user to search and obtain a retrospective overview of persons riding bikes on a train platform by following the (subject, predicate, object) format. In the traditional VAD pipeline of Figure 2A, a user will typically be presented with numerous false hits (i.e. non-anomalous events presented as anomalous events). That is, searching for "person" and "bike" as separate keywords will not allow to distinguish between people riding bikes and people walking next to their bikes.

According to the disclosure, a graph may be generated, named first graph, to represent the subject-predicate-object triples generated by performing captioning of the video data, wherein subjects and objects are represented as nodes and predicates as edges. Such a graph may serve as a historical record or log of detected subjects, predicates, and objects, and/or serve to fact-check the accuracy of the detection model.

For instance, it becomes possible to fact-check such a graph against at least one ontology-based knowledge graph representing possible subject-predicate-object triples, that is a graph representing ground truth as confirmed by a trusted source. Indeed, MLMs are known to hallucinate, i.e. to generate fictional content based on correct and/or incorrect facts. Comparing the said first graph with a graph representing ground truth allows to eliminate fictional triples, and thus to reduce the risk of using erroneous data (e.g. for VAD or statistical purposes).

According to the disclosure, fact-checking may be done before or after identification of the said user-relevant content. However, it is preferable to perform fact-checking before the said identification, in order to avoid presenting the user with false hits.

According to the disclosure, one or more ontology-based knowledge graphs representing possible subject-predicate-object triples may be used. Indeed, what represents ground truth may vary depending on, for example, which video surveillance cameras are used for VAD and/or in which environment VAD is performed.

For example, 'a person lies in a bed' may be possible (i.e. correspond to ground truth) when captured by a video camera located in a hospital room or when monitoring a hospital environment, but is unlikely to be true when captured by a video camera monitoring a street or a manufacturing environment.

Thus, it may be required to change the ground truth depending on the use case. To this end, the VMS may allow the user to select one ontology-based knowledge graph amongst several graphs based on contextual information such as where a video camera is located and/or which environment is monitored. To this end, attributes of the video cameras and/or the environment being monitored may be used to create and/or select different ground truth graphs for different monitoring scenarios.

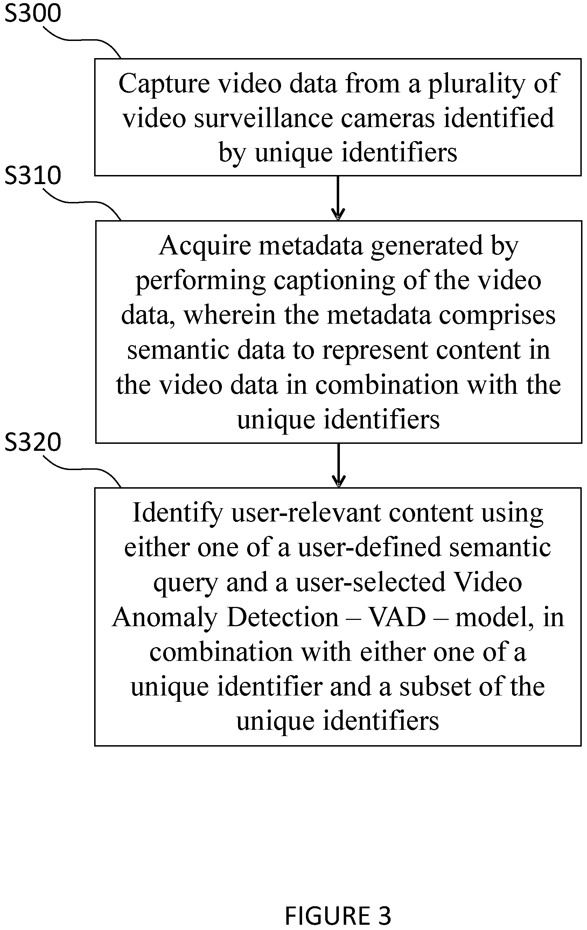

Figure 3 is a flowchart illustrating the method of video surveillance according to the disclosure.

The method comprises, in a step S300, capturing video data from a plurality of video surveillance cameras identified by unique identifiers. This step may correspond to step S200, or to steps S200 and S210 in combination (if step S210 is needed).

Next, in a step S310, the method comprises acquiring metadata generated by performing captioning of the video data, wherein the metadata comprises semantic data to represent content in the video data in combination with the unique identifiers. This step essentially corresponds to step S220' described above, wherein the said metadata is acquired by the VMS.

Next, in a step S310, the method comprises identifying user-relevant content using either one of a user-defined semantic query and a user-selected Video Anomaly Detection - VAD - model, in combination with either one of a unique identifier and a subset of the unique identifiers. This step essentially corresponds to steps S230' and S240' as described above.

The present disclosure also covers a computer program which, when run on a computer, causes the computer to carry out a method according to any one of the embodiments, alternatives, aspects and examples of the present disclosure, as shown for example in Figure 3. The disclosure also provides a computer-readable data carrier having stored thereon the said computer program.

The present disclosure further covers a video surveillance system comprising at least one processor configured to cause capture of video data by a plurality of video surveillance cameras identified by unique identifiers; acquire metadata generated by performing captioning of the video data, wherein the metadata comprises semantic data to represent content in the video data in combination with the unique identifiers; and identify the said user-relevant content using either one of a user-defined semantic query and a user-selected Video Anomaly Detection - VAD - model, in combination with either one of a unique identifier and a subset of the unique identifiers.

That is, the present disclosure covers a video surveillance system comprising one or more processors configured to implement a method according to any one of the embodiments, alternatives, aspects and examples of the present disclosure, as in Figure 3 and corresponding steps of Figure 2B.

Preferably, the semantic data used by the video surveillance system uses subject-predicate-object triples to represent content in the video data, as described above.

Preferably, the video surveillance system is configured to perform captioning of the video data by using at least one machine learning model, MLM, as described above.

Optionally, the video surveillance system is configured to capture the video data, acquire the metadata, and identify the said user-relevant content in a live fashion, the video surveillance system being configured to generate a message, instruction, event and/or additional metadata in a Video Management System, VMS, of the video surveillance system, when the said user-defined semantic query or user-selected VAD model in combination with either one of the said unique identifier and the said subset of the unique identifiers match at least one corresponding subject-predicate-object and at least one corresponding unique identifier in the metadata, as described above.

Optionally, and alternatively, the video surveillance system is configured to capture the video data and acquire the metadata in a live fashion, and identify the said user-relevant content in a delayed fashion upon receipt of the said user-defined semantic query in combination with either one of the said unique identifier and the said subset of the unique identifiers, as described above.

Optionally, the video surveillance system uses a user-selected VAD model comprising another MLM, as a second MLM, or uses a rules engine, configured to perform VAD, on the acquired video data corresponding to the said unique identifier or the said subset of the unique identifiers.

While the present disclosure has been described with reference to embodiments, it is to be understood that the disclosure is not limited to the disclosed embodiments. The present disclosure can be implemented in various forms without departing from the principal features of the present disclosure as defined by the claims.

## Claims

1. A method of video surveillance comprising:
- capturing video data from a plurality of video surveillance cameras identified by unique identifiers;
- acquiring metadata generated by performing captioning of the video data, wherein the metadata comprises semantic data to represent content in the video data in combination with the unique identifiers; and
- identifying user-relevant content using either one of a user-defined semantic query and a user-selected Video Anomaly Detection - VAD - model, in combination with either one of a unique identifier and a subset of the unique identifiers.

2. The method according to claim 1, wherein the semantic data uses subject-predicate-object triples to represent content in the video data.

3. The method according to claim 2, wherein performing captioning of the video data uses at least one machine learning model, MLM.

4. The method according to claim 3, wherein the said MLM performs Open-Set Recognition, OSR, to recognise classes of subjects, predicates and/or objects which have not been predefined.

5. The method according to claim 3 or 4, wherein the said MLM comprises a Large Language Model, LLM, as a first LLM, the first LLM being configured to perform captioning of the video data.

6. The method according to any one of claims 2 to 5, wherein capturing the video data, acquiring the metadata, and identifying the said user-relevant content are performed in a live fashion, the method further comprising generating a message, instruction, event and/or additional metadata in a Video Management System, VMS, when the said user-defined semantic query or the said user-selected VAD model in combination with either one of the said unique identifier and the said subset of the unique identifiers match at least one corresponding subject-predicate-object and at least one corresponding unique identifier in the metadata.

7. The method according to claim 6, wherein generating the message, instruction, event or additional metadata is triggered by a rules engine, as a first rules engine, based on the said user-defined semantic query.

8. The method according to claim 6 or 7, wherein the instruction comprises an instruction to modify at least a part of the video data or a display thereof.

9. The method according to any one of claims 6 to 8, wherein the message comprises an alert to be displayed in the VMS to a user.

10. The method according to any one of claims 2 to 5, wherein capturing the video data and acquiring the metadata is performed in a live fashion, and identifying the said user-relevant content is performed in a delayed fashion upon receipt of the said user-defined semantic query in combination with either one of the said unique identifier and the said subset of the unique identifiers.

11. The method according to any one of claims 2 to 10, further comprising generating a graph, named first graph, to represent the subject-predicate-object triples generated by performing captioning of the video data, wherein subjects and objects are represented as nodes and predicates as edges.

12. The method according to claim 11, in combination with claim 3, the method further comprising fact-checking the subject-predicate-object triples of the first graph against at least one ontology-based knowledge graph representing possible subj ect-predicate-obj ect triples.

13. The method according to claim 1, wherein the said user-selected VAD model comprises at least one machine learning model, MLM, or a rules engine, configured to perform VAD, on the acquired video data corresponding to the said unique identifier or the said subset of the unique identifiers.

14. A computer program comprising instructions which, when executed by a computer, cause the computer to carry out a method according to a method according to any one of claims 1 to 13.

15. A video surveillance system comprising one or more processors configured to:
- cause capture of video data by a plurality of video surveillance cameras identified by unique identifiers;
- acquire metadata generated by performing captioning of the video data, wherein the metadata comprises semantic data to represent content in the video data in combination with the unique identifiers; and
- identify the said user-relevant content using either one of a user-defined semantic query and a user-selected Video Anomaly Detection - VAD - model, in combination with either one of a unique identifier and a subset of the unique identifiers.
